# EUROPÄISCHE PATENTANMELDUNG

(11) **EP 2 502 740 A1**
(43) Veröffentlichungstag der Anmeldung: **26.09.2012**
(21) Anmeldenummer: 12001850.2
(22) Anmeldetag: 19.03.2012
(51) Int. Cl.: B32B 7/14, E04B 1/66, E04D 5/10, E04D 13/16

(54) **Folienverbund**

(30) Priorität: 22.03.2011 DE 202011004263 U
(71) Anmelder: Watermann Polyworks GmbH, 32758 Detmold (DE)
(72) Erfinder: Watermann, Markus, 32805 Horn-Bad Meinberg (DE)
(74) Vertreter: Holland, Ralf

(57) **Zusammenfassung**

Bei einem Folienverbund (3), insbesondere einer Dichtbahn, mit wenigstens zwei Folienschichten (4,5) sind die beiden Folienschichten (4,5) flächenhaft untereinander derart verbunden, dass wenigstens ein Längsrand (6,7) des Folienverbundes (3) von einem Überstand (8,9) einer Folienschicht (4) ausgebildet wird, wobei die Materialstärke des Überstandes (8,9) gleich oder geringer bemessen ist als die Hälfte der Materialstärke des Folienverbundes (3).

## Beschreibung

Die Erfindung betrifft einen Folienverbund, insbesondere eine Dichtbahn, aufweisend wenigstens zwei unlösbare miteinander verbundene Folienschichten.

Folienverbunde der in Rede stehenden Art sind in vielfältigen Ausführungsformen bekannt und bewährt. Zweckmäßig sind Folienverbunde in der Regel deshalb, weil einzelnen Folienschichten unterschiedliche Funktionen zugeordnet werden können, beispielsweise eine Dampfsperre, eine Trittschallisolierung, eine Wärmeisolierung oder dergleichen miteinander kombinierend.

Werden große Flächen mit aneinanderstoßenden Bahnen eines Folienverbundes belegt, so wird die Funktion an einem solchen Stoß unterbrochen. Solches kann insbesondere bei einer Dampfsperre oder einer wasserundurchlässigen Schicht nicht hingenommen werden. Werden solche Bahnen von Folienverbunden jedoch überlappend miteinander verklebt oder verschweißt, so entstehen störende Stufen, an denen es darüber hinaus bei einer dauernden Belastung zu Ermühdungsbrüchen bzw. Ermühdungsrissen kommen kann.

Vor diesem technischen Hintergrund macht die Erfindung es sich zur Aufgabe, einen Folienverbund zur Verfügung zu stellen, der äußerst vielseitig einsetzbar ist und der in einfacher Weise einen ebenen Übergang von einer Bahn auf eine benachbarte Bahn eines Folienverbundes erlaubt.

Gelöst wird diese technische Problematik bei einem Folienverbund, insbesondere Dichtbahn, aufweisend wenigstens zwei Folienschichten gemäß des Anspruchs 1 durch die Maßnahmen, dass die beiden Folienschichten flächenhaft untereinander verbunden sind, dass wenigstens ein Längsrand des Folienverbundes von einem Überstand einer Folienschicht ausgebildet wird und dass die Materialstärke des Überstandes gleich oder geringer bemessen ist als die Hälfte der Materialstärke des Folienverbundes.

Wird ein Längsrand des Folienverbundes von einem Überstand einer Folienschicht ausgebildet, eignet sich ein solcher Folienverbund für einen Wand-Bodenanschluss in einem Zuge, unter Verzicht auf ein gesondertes Dichtungsband. Hierbei wird vorzugsweise ein einlagiger Überstand an einer aufgehenden Wand regelmäßig festgelegt werden, während der insbesondere unterseitige, mehrlagige Folienverbund auf einem Boden festgelegt wird.

Sind zwei Überstände vorgesehen, insbesondere gleicher Breite, können Bahnen des Folienverbundes beliebig aneinandergesetzt werden, wobei die Überstände überlappen und damit einen ebenen Übergang von einer Bahn auf eine nächste Bahn ermöglichen.

Unabhängig hiervon kann vorgesehen sein, dass die beiden Folienschichten unterschiedliche Funktionen wahrnehmen.

So kann beispielsweise daran gedacht sein, dass eine Folienschicht durch eine Aluminiumfolie ausgebildet ist, womit eine absolute Dampfsperre vorliegt. Zweckmäßigerweise wird eine solche Aluminiumfolie in einem Folienverbund noch mit einer alkalibeständigen Folie kaschiert sein, um alkalische Kleber in Verbindung mit dem Aluminium nutzen zu können. Eine solche Aluminiumfolie kann vergleichsweise dünn sein, bspw. eine Materialstärke von 18 µm aufweisen.

In konstruktiver Weiterbildung des Folienverbundes nach der Erfindung ist vorgesehen, dass eine oder beide Flachseiten des Überstands mit einem Klebstoff versehen ist bzw. sind. Eine solche Klebstoffschicht, vorzugsweise von geringer Dicke, wird bei einem überlappenden Verkleben der Überstände nicht wesentlich auftragen. Wird der Folienverbund als Wand-Bodenanschluss verwendet, spielt die Dicke des Klebstoffes kaum eine Rolle, wenn der Überstand auf der den weiteren Folienschichten zugewandten Flachseite aufgetragen ist und an einer aufgehenden Wand festgelegt wird.

Dabei kann, vorkonfektioniert, eine oder beide Flachseiten des Überstandes in üblicher Weise mit einem Klebstoff versehen sein, der von einer abziehbaren Schutzfolie überdeckt ist.

In weiterer Ausgestaltung des Folienverbundes kann vorgesehen sein, dass beide Längsränder des Folienverbundes durch Überstände derselben Folienschicht ausgebildet werden.

Dabei ist insbesondere daran gedacht, dass diese den mit einem Klebstoff versehenen Überstand bzw. Überstände ausbildende Folienschicht dampfoffen ist, so dass es zu einem schnellen Trocknen eines Klebstoffes kommt, insbesondere bei einem überlappenden Verkleben.

In Weiterbildung des Folienverbundes ist vorgesehen, dass jede Folienschicht eine Materialstärke von wenigstens 100 µm aufweist. Bereits bei zwei Folienschichten werden damit die in Deutschland gesetzlichen Vorgaben erfüllt. Alternativ sind jedoch bspw. dampfoffene Folien einer Materialstärke von 30 µm gleichfalls möglich.

Durch die Maßnahme, dass die Materialstärke der beiden Folienschichten gleich bemessen ist, kann aufgrund der Symmetrieeigenschaften in einfacher Weise ein stufenloser Übergang von einer Bahn auf eine nächste Bahn eines Folienverbundes bei einem überlappenden Ansatz bzw. Verklebung erreicht werden.

In weiterer Ausgestaltung des Folienverbundes nach der Erfindung ist vorgesehen, dass eine Ecke durch zwei aneinanderstoßende Ränder jeweils eines Überstands ausgebildet wird. Infolge dieser Maßnahme können als Dichtbahnen ausgebildete Folienverbünde, wie voranstehend beschrieben, auch in Längsrichtung aneinandergesetzt sein.

Insbesondere ist dann jedoch daran gedacht, dass der Folienverbund fleckenartig ausgebildet ist mit einem umlaufenden Überstand. Ein solcher Folienverbund, quadratisch-rechteckig, gegebenenfalls auch rund ausgebildet, kann dann beispielsweise für die Abdichtung von Kabel- und/oder Rohrdurchführungen in einer Wand herangezogen werden. Gegebenenfalls kann ein solcher als Flecken ausgebildeter Folienverbund mittig noch eine Durchbrechung oder Einschnitte hierzu aufweisen.

Das Wesen der Erfindung wird anhand der Zeichnung näher erläutert, in der lediglich Ausführungsbeispiele schematisch und nicht maßstabsgerecht dargestellt sind. In der Zeichnung zeigt:
- Fig. 1:: den Ansatz zweier Bahnen eines Folienverbundes nach der Erfindung auf einem Boden,
- Fig. 2:: einen Wand-Bodenanschluss mit einem Folienverbund nach der Erfindung und
- Fig. 3:: eine Draufsicht auf einen fleckenartig ausgebildeten Folienverbund.

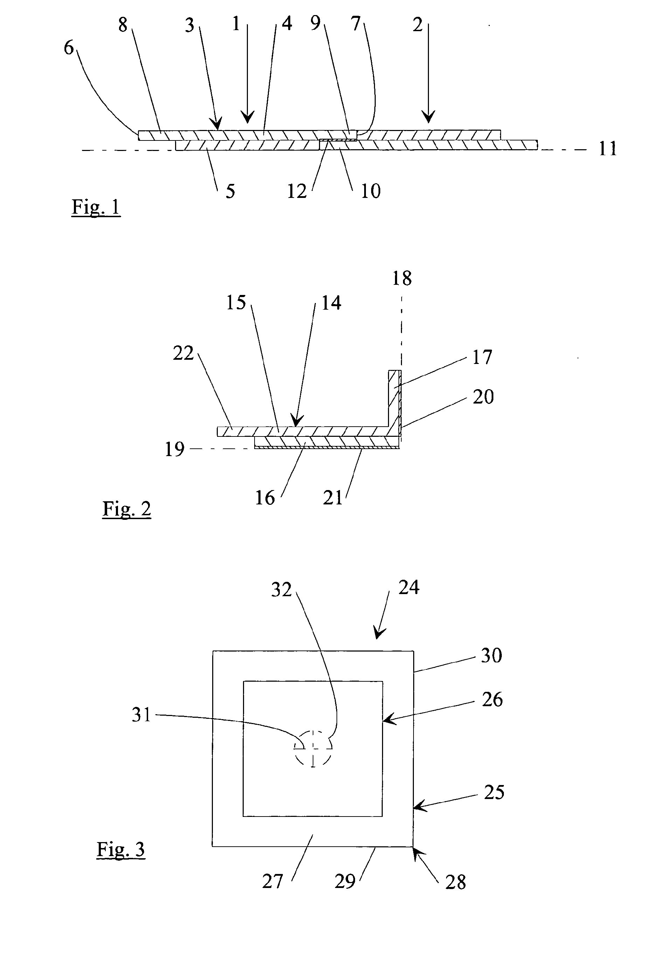

Figur 1 zeigt in einem zeichnerisch überhöhten Querschnitt zwei Bahnen 1,2 eines Folienverbundes 3 mit zwei Folienschichten 4,5. Der Folienverbund 3 weist bei diesem Ausführungsbeispiel zwei Längsränder 6,7 auf, die durch jeweils einen Überstand 8,9 der Folienschicht 4 gegenüber der Folienschicht 5 ausgebildet werden.

Die Materialstärke der Überstände 8,9 entspricht bei dem dargestellten Ausführungsbeispiel etwa der Hälfte der Materialstärke des Folienverbundes 3 insgesamt und liegt die Materialstärke des Folienverbundes 3 insgesamt bei etwa 200 µm.

Infolgedessen können die Bahnen 1,2 des Folienverbundes, nach entsprechender Drehung der Bahn 2, mit den Überständen 9,10 überlappen, so dass die Bahnen 1,2 vollflächig auf einem Boden 11 aufliegen und auch die beiden Oberseiten der Bahnen 1,2 eine Ebene ausbilden.

Bei einer solchen Ausbildung eines Folienverbundes 3 ist es zweckmäßig, zumindest einen Überstand 9 mit einem Klebstoff 12 zu versehen, in üblicher Weise aufgetragen und, bei Nichtgebrauch, mit einer abziehbaren Schutzfolie versehen. Hierbei ist in Fig. 1 die Materialstärke des Klebstoffs 12 deutlich überzeichnet.

Bei einem derartigen Folienverbund 3 nach Figur 1 ist insbesondere die die Überstände 8-10 ausbildende Folienschicht 4 dampfoffen, so dass es zu einem schnellen Abbinden des Klebstoffes 12 kommt.

Unabhängig hiervon kann die Folienschicht 5 eine andere Funktion wahrnehmen, beispielsweise dampf- oder wasserdicht ausgebildet sein. Dabei weisen die beiden Folienschichten 4,5 jeweils eine Materialstärke von vorzugsweise 100 µm auf.

Figur 2 zeigt in einem Querschnitt einen Wand-Bodenanschluss mittels eines Folienverbundes 14 in einem Zug, ohne die Verwendung eines zusätzlichen Dichtungsbandes. Auch dieser Folienverbund 14 weist zwei Folienschichten 15,16 auf, wobei die obere Folienschicht 15 einen Überstand 17 gegenüber der unteren Folienschicht 16 aufweist, der derart bemessen ist, dass er für den dargestellten Anschluss der Wand 18 an einen Boden 19 ausreichend ist. Auch dieser Überstand 17 kann mit einem Klebstoff 20 versehen sein, wie auch die untere Folienschicht 16 mit einem vollflächigen Klebstoff 21 für ein unmittelbares Verkleben mit dem Boden 19.

Sofern weitere Bahnen eines Folienverbundes bodenseitig anschließen sollen, kann die obere Folienschicht 15 auch mit einem zweiten Überstand 22 noch versehen sein.

Ein solcher Folienverbund 14 kann in einfacher Weise in die Ecke zwischen dem Boden 19 und der Wand 18 eingebracht und dort verklebt werden, wobei die Folienschichten 15,16 wiederum unterschiedliche Aufgaben wahrnehmen können. So kann beispielsweise die obere Folienschicht 15 aus einer PP-Folie und die untere Folienschicht 16 aus einer Gummigranulatfolie bestehen, beide vorzugsweise von gleicher Materialstärke von 100 µm.

Ist jedoch unter anderem an eine Trittschallisolierung durch die untere Folienschicht 16 gedacht, kann diese bspw. eine

Gummigranulatfolie größerer Materialstärke aufweisen, bspw. von 200 µm.

Figur 3 zeigt einen Folienverbund 24 in einer Draufsicht von quadratischer Gestalt. Durch eine in Figur 3 untere Folienschicht 25 wird gegenüber einer oberen Folienschicht 26 ein umlaufender Überstand 27 ausgebildet, so dass jede Ecke 28 des Folienverbundes 24 durch zwei Ränder 29,30 des Überstandes 27 ausgebildet wird.

Ein solcher Folienverbund 24 dient einer punktuellen Verwendung und kann insbesondere für eine Abdichtung von Wanddurchführungen von Rohren, Kabeln oder dergleichen herangezogen werden. Hierzu kann der Folienverbund 24 mit einem kreuzförmigen Einschnitt 31 oder einer Durchbrechung 32 noch versehen sein.

### Bezugszeichenliste:

1. Bahn
2. Bahn
3. Folienverbund
4. Folienschicht
5. Folienschicht
6. Längsrand
7. Längsrand
8. Überstand
9. Überstand
10. Überstand
11. Boden
12. Klebstoff
13.
14. Folienverbund
15. Folienschicht
16. Folienschicht
17. Überstand
18. Wand
19. Boden
20. Kleber
21. Kleber
22. Überstand
23.
24. Folienverbund
25. Folienschicht
26. Folienschicht
27. Überstand
28. Ecke
29. Rand
30. Rand
31. Einschnitt
32. Durchbrechung

## Patentansprüche

1. Folienverbund, insbesondere Dichtbahn, aufweisend wenigstens zwei Folienschichten, **dadurch gekennzeichnet, dass** die beiden Folienschichten (4,5) flächenhaft untereinander verbunden sind, dass wenigstens ein Längsrand /6,7) des Folienverbundes (3) von einem Überstand (8,9) einer Folienschicht (4) ausgebildet wird und dass die Materialstärke des Überstandes (8,9) gleich oder geringer bemessen ist als die Hälfte der Materialstärke des Folienverbundes (3).

2. Folienverbund nach Anspruch 1, **dadurch gekennzeichnet, dass** die beiden Folienschichten (4,5) unterschiedliche Funktionen wahrnehmen.

3. Folienverbund nach einem oder mehreren der vorangehenden Ansprüche, **dadurch gekennzeichnet, dass** eine Folienschicht durch eine Aluminiumfolie ausgebildet ist.

4. Folienverbund nach einem oder mehreren der vorangehenden Ansprüche, **dadurch gekennzeichnet, dass** eine oder beide Flachseiten des Überstands (9) mit einem Klebstoff (12) versehen ist bzw. sind.

5. Folienverbund nach einem oder mehreren der vorangehenden Ansprüche, **dadurch gekennzeichnet, dass** beide Längsränder (6,7) des Folienverbundes (3) durch Überstände (8,9) derselben Folienschicht (4) ausgebildet werden.

6. Folienverbund nach einem oder mehreren der vorangehenden Ansprüche, **dadurch gekennzeichnet, dass** die einen Überstand (8,) ausbildende Folienschicht (4) dampfoffen ist.

7. Folienverbund nach einem oder mehreren der vorangehenden Ansprüche, **dadurch gekennzeichnet, dass** jede Folienschicht (4,5) eine Materialstärke von wenigstens 100 µm aufweist.

8. Folienverbund nach einem oder mehreren der vorangehenden Ansprüche, **dadurch gekennzeichnet, dass** die Materialstärke der beiden Folienschichten (4,5) gleich bemessen ist.

9. Folienverbund nach einem oder mehreren der vorangehenden Ansprüche, **dadurch gekennzeichnet, dass** eine Ecke (28) durch zwei aneinanderstoßende Ränder (29,30) jeweils eines Überstands (27,27) ausgebildet wird.

10. Folienverbund nach einem oder mehreren der vorangehenden
Ansprüche, **dadurch gekennzeichnet, dass** der Folienverbund (24) fleckenartig ausgebildet ist mit einem umlaufenden Überstand (27).
